# EUROPEAN PATENT SPECIFICATION

(11) **EP 2 175 591 B1**
(45) Date of publication and mention of the grant of the patent: **14.09.2011**
(21) Application number: 08800953.5
(22) Date of filing: 23.09.2008
(51) Int. Cl.: H04L 12/56, H04L 29/06

(54) **A METHOD, A SYSTEM, A DEVICE AND A COMPUTER PROGRAM READABLE MEDIUM FOR REALIZING THE SERVICES OF NETWORK TELEVISON**
EIN VERFAHREN, EIN SYSTEM, EIN GERÄT UND EIN COMPUTERPROGRAMMPRODUKT ZUR BEREITSTELLUNG DER DIENSTE VON NETZWERKFERNSEHEN
PROCÉDÉ, SYSTÈME, DISPOSITIF ET PRODUIT DE PROGRAMME INFORMATIQUE PERMETTANT DE RÉALISER LES SERVICES DE TÉLÉVISION EN RÉSEAU

(30) Priority: 13.12.2007 CN 200710125055
(43) Date of publication of application: 14.04.2010
(73) Proprietor: Huawei Technologies Co., Ltd., Longgang District, Shenzhen Guangdong 518129 (CN)
(72) Inventor: HUANG, Hui, Longgang District Shenzhen 518129 (CN)
(74) Representative: Kreuz, Georg Maria
(86) International application number: PCT/CN2008/072464
(87) International publication number: WO 2009/076809

(56) References cited:
- WO-A1-2007/096001
- CN-A- 1 838 649
- CN-A- 1 929 458
- CN-A- 1 929 460
- CN-A- 101 197 832
- US-A1- 2004 184 432
- US-A1- 2007 140 150

## Description

### FIELD OF THE TECHNOLOGY

The present invention relates to the field of communication technology, and more particularly to a method, system, and device for realizing an Internet Protocol television (IPTV) service.

### BACKGROUND OF THE INVENTION

Internet Protocol television (IPTV) is an IP-based TV broadcasting service. Based on the IP technology, the IPTV provides interactive services, mainly streaming media services, for users through a manageable network. The interactive services include basic services like TV live, video on demand (VOD), and pause live TV (PLTV), and also include triple play services of communication, data, and video developed based on the basic services. An IPTV system has the functions of achieving network transparency, supporting fixed and mobile networks at the same time, having an open service integration environment, having a standardized service capability of allowing new services to be conveniently added and a plurality of services to be converged, having a uniform user and service management and accounting system, and ensuring end-to-end quality of service (QoS).

An IP multimedia subsystem (IMS) provides a method for solving the above problem. The IMS is proposed in Release 5 version standard by the 3rd Generation Partnership Project (3GPP). Based on a Session Initiation Protocol (SIP) system, the IMS creates, manages, and terminates various types of multimedia services by using an SIP call control mechanism. Various types of clients may set up end-to-end IP communication through the IMS, and obtain the desired QoS. In addition to the session management, the IMS also finishes necessary functions for providing the services. For example, the functions may be registration, security, accounting, bearer control, and roaming. The IMS provides a basis for service convergence, and supports voice, data, and multimedia services and new applications based on the IP technology.

Therefore, the IPTV service is developed based on the IMS network architecture, which has already become a common understanding among many communication equipment suppliers and operators, and is a developing trend of the service.

However, the deployment of the IPTV system in the IMS does not have a uniform standard, and different manufacturers have different ideas. Usually, a thorough modification is performed, that is, the existing service control and media session control mechanisms of the conventional IPTV system are discarded, and an SIP-based session control method in the IMS is completely adopted.

In the existing IPTV system based on the IMS service control, a call session control function (CSCF) directly performs service control on an IPTV application server (IPTV AS) through SIP message interaction, in which the service control includes user authentication, service subscription, authority control when the service is used, and the like. The above-mentioned controls do not have a uniform specification in the conventional IPTV system, and basically each manufacturer adopts a private protocol, for example, a private protocol based on a Hypertext Transfer Protocol (HTTP). The service control is realized by the IMS-CSCF in the IMS network architecture. The IPTV AS performs information interaction with the CSCF through the standard SIP. In order to support the IMS architecture, in the existing method, a private service control protocol in the conventional IPTV system is replaced by a standard control protocol over SIP.

The IMS-CSCF directly performs media session control with a content distribution and storage system through SIP message interaction, in which the media session control includes media server resource allocation when the media content is distributed, session setup, fast forward, fast reverse, location control, session teardown, and other procedures. For the above-mentioned controls, the conventional IPTV system performs media session control by adopting a Real Time Streaming Protocol (RTSP) specified by a Request for Comments (RFC) 2326 standard. The message control of the media session control is based on the SIP in the IMS network architecture. In order to support the IMS architecture, in the existing method, the RTSP is replaced by the SIP.

The existing system for realizing the IPTV service has the following disadvantages. As plenty of IPTV systems based on the conventional session control method have already been deployed in the existing network, the thorough modification in a large scope may bring great impacts to smooth upgrading and interworking of the existing network system, and the modification is also difficult to be performed.

US 2004/184432 A1 relates to a method for controlling streaming service between a terminal (UE) and a streaming server (SS) via a communication network, wherein the communication network comprises at least one application server (AS) and a controlling entity (PCT, CSCF), the method comprising the steps of: requesting a streaming session by said terminal at said application server, negotiating streaming session details between the application server (AS) and the streaming server (SS), informing the controlling entity (PCF) of the result of negotiating, and creating, at said controlling entity (PCF), authorization information for the requested streaming session, and supplying access nodes (GGSN) of the communication network with the authorization information.

WO 2007/096001 Al relates to an IMS-enabled control channel for an IPTV service, including receiving at a Serving Call/State Control Function (S-CSCF) a Session Initiation Protocol (SIP) REGISTER message, the SIP REGISTER message identifying the originating user, receiving at the originating user a response from the S-CSCF indicating that the originating user has been authorised, and sending a SIP INVITE message from the S-CSCF to establish an open channel connection with a selected IPTV Application Server (AS). This open channel connection can then be used for the transmission of control messages, such as for starting play, starting recording, stopping play, etc., between the STB and the IPTV applications server, as well as for the delivery of personalized content, such as advertisements, voting responses, personalized voting triggers and targeted interactive events. By maintaining an open control channel with the IPTV AS, this offers a substantial reduction in the setup delay times for different applications.

### SUMMARY OF THE INVENTION

Accordingly, the present invention provides technical solutions to solve the impacts and difficulties resulting from the thorough and overall modification performed on the existing network system when the Internet Protocol television (IPTV) service based on the IP multimedia subsystem (IMS) service control is realized in the prior art.

As a first aspect the present invention provides a system for realizing an IPTV service, which includes an IPTV application server (IPTV AS) comprising an electronic program guide, EPG, server and an authentication and authorization center, AAC and a content distribution and storage system comprising a media center control unit and a media service units, and further includes a conversion device.

The conversion device is adapted to receive a message sent by a user terminal in a protocol format based on a multimedia subsystem, convert the message between a message in the protocol format based on the multimedia subsystem and a message in a protocol format based on an IPTV system, and transmit the converted message in the protocol format based on the IPTV system to the IPTV AS and the content distribution and storage system according to the content of the message.
wherein convert the messages between a message in the protocol format based on IMS and a message in a protocol format based on an IPTV system comprises:
convert the message in a Session Initiation Protocol, SIP, format based on the IMS to a message in a private protocol format based on the IPTV system during a service control process; and
convert the message in the Session Initiation Protocol, SIP, format based on the IMS to a message in the Real Time Streaming Protocol, RTSP, format based on the IPTV system during a media session control process;
wherein the transmit the converted message in the protocol format based on the IPTV system to the IPTV AS and the content distribution and storage system according to a content of the message comprises:
transmit the converted message in a private protocol format based on the IPTV system to the EPG or the AAC in the IPTV AS of the IPTV system; and
transmit the converted message in the Real Time Streaming Protocol, RTSP to the content distribution and storage system in the IPTV system.

As a second aspect the present invention provides a conversion device, which is applied to an IPTV service based on an IP multimedia subsystem, IMS, service control system comprising an IPTV application server, IPTV AS comprising an electronic program guide ,EPG, server and an authentication and authorization center ,AAC, and a content distribution and storage system comprising a media center control unit and a media service units, and includes a receiving unit, a conversion unit, and a request processing unit.

The receiving unit is adapted to receive a message sent by a user terminal in a protocol format based on a multimedia subsystem.

The conversion unit is adapted to convert the message between a message in the protocol format based on the multimedia subsystem and a message in a protocol format based on an IPTV system.

The request processing unit is adapted to transmit the converted message in the protocol format based on the IPTV system to a corresponding entity in the IPTV system according to the content of the message.
wherein convert the messages between a message in the protocol format based on IMS and a message in a protocol format based on an IPTV system comprises: convert the message in a Session Initiation Protocol, SIP, format based on the IMS to a message in a private protocol format based on the IPTV system during a service control process; and
convert the message in the Session Initiation Protocol, SIP, format based on the IMS to a message in the Real Time Streaming Protocol, RTSP, format based on the IPTV system during a media session control process;
wherein transmit the converted message in the protocol format based on the IPTV system to a corresponding entity in the IPTV system according to the content of the message comprises:
transmit the converted message in a private protocol format based on the IPTV system to the EPG or the AAC in the IPTV AS of the IPTV system; and
transmit the converted message in the Real Time Streaming Protocol, RTSP to the content distribution and storage system in the IPTV system.

As a third aspect the present invention provides a method for realizing an IPTV service which is applied to an Internet Protocol television, IPTV, service based on an IP multimedia subsystem, IMS, service control system comprising an IPTV application server, IPTV AS comprising an electronic program guide ,EPG, server and an authentication and authorization center ,AAC, and a content distribution and storage system comprising a media center control unit and a media service units, which includes the following steps.

A message sent by a user terminal in a protocol format based on a multimedia subsystem is received.

The message is converted between a message in the protocol format based on the multimedia subsystem and a message in a protocol format based on an IPTV system.

The converted message in the protocol format based on the IPTV system is transmitted to a corresponding entity in the IPTV system according to the content of the message.
wherein converting the messages between a message in the protocol format based on IMS and a message in a protocol format based on an IPTV system comprises: converting the message in a Session Initiation Protocol, SIP, format based on the IMS to a message in a private protocol format based on the IPTV system during a service control process; and
converting the message in the Session Initiation Protocol, SIP, format based on the IMS to a message in the Real Time Streaming Protocol, RTSP, format based on the IPTV system during a media session control process;
wherein transmitting the converted message in the protocol format based on the IPTV system to a corresponding entity in the IPTV system according to the content of the message comprises:
transmitting the converted message in a private protocol format based on the IPTV system to the EPG or the AAC in the IPTV AS of the IPTV system; and
transmitting the converted message in the Real Time Streaming Protocol, RTSP to the content distribution and storage system in the IPTV system.

As a fourth aspect the present invention provides a computer program readable medium. The computer program readable medium comprises computer program code, which, when executed by a computer unit, will cause the computer unit to perform the steps according to the method of claim 9-15.

It can be seen from the above technical solutions of the present invention that, a conversion device is added between the conventional IPTV system and the multimedia subsystem, so as to solve the problem in the prior art that a thorough and overall modification must be performed on the existing network system, thereby realizing interworking between the conventional IPTV system and the multimedia subsystem, and achieving smooth upgrading of the IPTV system in the multimedia subsystem network.

Further embodiments of the invention are described in the dependent claims.

### BRIEF DESCRIPTION OF THE DRAWINGS

To illustrate the technical solutions according to the present invention more clearly, the accompanying drawings of the embodiments of the present invention and the prior art are introduced below briefly. Apparently, the accompanying drawings and the following description merely show some of the embodiments of the present invention.
FIG. 1 is a schematic structural view of a system for realizing an IPTV service according to an embodiment of the present invention;
FIG. 2 is a flow chart of a method for realizing account opening, registration, and subscription of the IPTV service based on the system in FIG. 1 according to an embodiment of the present invention;
FIG. 3 is a flow chart of a method for realizing an on-demand IPTV service based on the system in FIG. 1 according to an embodiment of the present invention; and
FIG. 4 is a flow chart of a method for realizing a live IPTV service based on the system in FIG. 1 according to an embodiment of the present invention.

### DETAILED DESCRIPTION OF THE EMBODIMENTS

The technical solution according to some exemplary embodiments of the present invention will be clearly and fully described below with reference to the accompanying drawings. It is obvious that the embodiments to be described are a part rather than all of the embodiments of the present invention.

In an embodiment, the present invention provides a method for realizing an IPTV service, which includes the following steps. A message sent by a user terminal through a CSCF in a protocol format based on an IMS domain is received, in which the message may be a request message or other messages. The message in the protocol format based on the IMS domain is converted to a message in a protocol format based on an IPTV system. The converted message in the protocol format based on the IPTV system is transmitted to a corresponding entity in the IPTV system according to the content of the message. Therefore, the problem in the conventional art that a thorough and overall modification must be performed on the existing network system is eliminated, thereby realizing interworking between the conventional IPTV system and the IMS, and achieving smooth upgrading of the IPTV system in the IMS network.

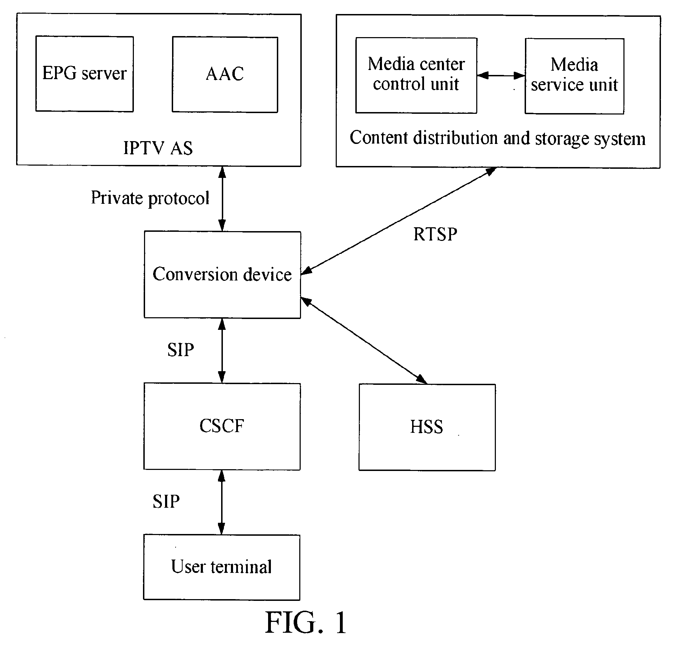

In order to realize the above method, in an embodiment, the present invention provides an IPTV system supporting IMS service control. FIG. 1 is a schematic structural view of the system according to the embodiment of the present invention. The system includes an IPTV AS, a content distribution and storage system, a conversion device, an IMS-CSCF, a home subscriber server (HSS), and a user terminal. For example, the user terminal may be a set-top box or a cell phone.

The IPTV AS is an AS in the IPTV system, and provides service browsing, selection, subscription, and other functions for the user. The IPTV AS is mainly composed of an electronic program guide (EPG) server and an authentication and authorization center (AAC). The EPG provides service browsing, selection, and other service navigation functions. The AAC saves service data including user subscription information about the service, receives a service request from the user, and performs a service access authentication on the user.

The content distribution and storage system is adapted to transmit the content to the user, and further has a content storage function for on-demand and recorded programs. A large-scale system is usually a distribution network composed of a plurality of nodes (media service units), and the dispatching among the nodes is coordinated and controlled by a media center control unit. The content distribution has two main modes. For a live program, the content is transmitted in a multicast mode. For an on-demand program, the content is transmitted in a unicast mode and in response to fast forward, fast reverse, pause, and other requests from the user.

The conversion device mainly includes a receiving unit, an information acquisition unit, a conversion unit, and a request processing unit.

The receiving unit is adapted to receive registration, subscription, content request, and other request messages sent through the CSCF.

The information acquisition unit is adapted to request user service data information about the user when opening an account in two different domains (i.e. the IPTV domain and the IMS domain) and association relations between the information in the two domains from the HSS after receiving a registration request from the user, and save the obtained user service data information and the association relations thereof. The user service data includes a user identifier (ID).

The conversion unit is adapted to convert the IMS user ID (for example, SIP URI) obtained by the information acquisition unit to a conventional IPTV user ID; convert protocol format between a protocol format based on the IMS (for example, the SIP) and a private protocol based on the IPTV system during service control, in which the conversion may be applied to user subscription, subscription canceling, session request, session control, and other procedures; and convert the protocol format based on the IMS (for example, the SIP) to an RTSP based on the IPTV system during media session control, in which the conversion may be applied to media server resource allocation, session setup, fast forward, fast reverse, location control, session teardown, and other procedures when the media content is distributed.

The request processing unit is adapted to transmit the converted request in the protocol format based on the IPTV system to a corresponding entity in the IPTV system, according to a request message based on the IMS sent by the CSCF, and, and further adapted to transmit the converted response message in the protocol format based on the IMS to the CSCF, according to a response message returned by a corresponding entity in the IPTV system. In actual applications, a converted message in the corresponding protocol format based on the IPTV system may be sent to a corresponding entity in the IPTV system according to the specific content of the message sent by the CSCF. For example, the message in a format based on the corresponding protocol may be an HTTP, RTSP, and other private protocols. For example, if the CSCF sends an on-demand content request message, the content request is transmitted to a media control unit and a media server through the converted RTSP based on the IPTV. Optionally, an authentication request is transmitted to the AAC through a converted private protocol based on the IPTV.

An interactive message format between the conversion device and the EPG in the IPTV system or the AAC is based on a converted private protocol in the IPTV system. An exchange protocol between the conversion device and the content distribution and storage system in the IPTV system may be the RTSP in the IPTV system. An interactive protocol between the conversion device and the CSCF in the IMS domain may be a protocol format based on the IMS domain, for example, the SIP.

Optionally, the system further includes an HSS adapted to save the user service data of the user in the IMS domain and the IPTV domain and the association relations between the user service data in the two domains. The conversion device requests the user service data of the user in the two domains and the association relations between the user service data in the two domains from the HSS through an Sh protocol, and saves the obtained user service data and the association relations thereof, in which the user service data includes the user ID and other information. The conversion device is further adapted to convert a user ID between the IMS domain and the IPTV domain. In practice, the user service data of the user in the IMS domain and the IPTV domain and the association relations between the user service data in the two domains may be saved in a business and operation support system (BOSS), and the conversion device directly requests the user service data and the association relations thereof from the BOSS.

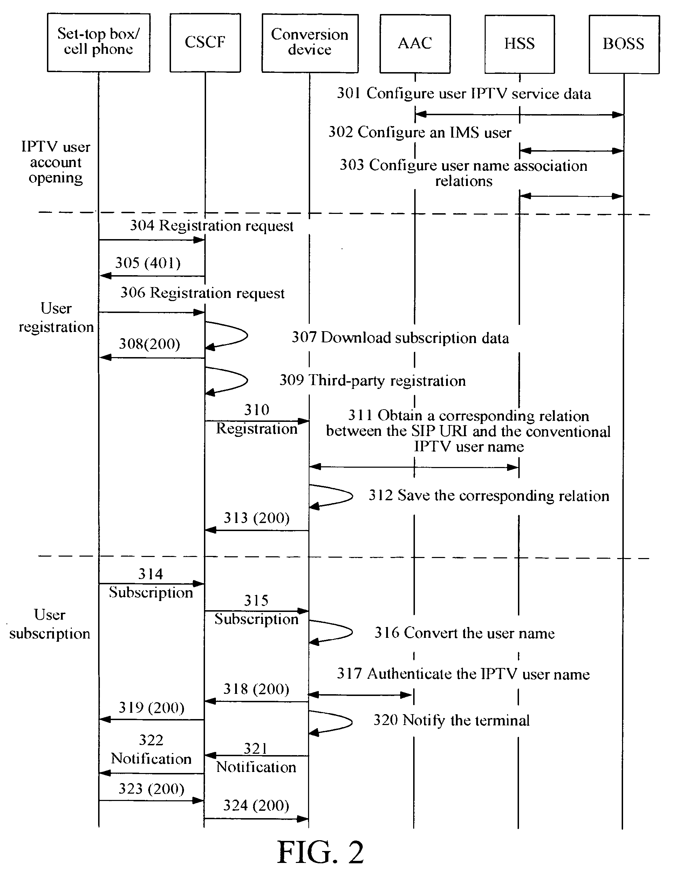

In order to have a further understanding of the embodiment of the present invention, it is taken as an example for illustration that the system is applied to user account opening, registration, service subscription, on-demand service, live service, and other procedures. Figures 2, 3, and 4 are flow charts of the method of the embodiment, and a detailed description is given as follows.

FIG. 2 is a flow chart of user account opening, registration, and service subscription, which includes the following steps.

IPTV user account opening stage:

ln step 301, when an IPTV user opens a new account, the BOSS performs an IPTV user service data configuration on the existing IPTV system, and saves the data in the AAC in the IPTV domain.

In step 302, a new account needs to be opened in the IMS domain, and the BOSS performs an IMS user service data configuration on the HSS in the IMS domain.

In step 303, the BOSS associates the user service data information in the two domains through configuration association relations, and synchronizes the user service data information in the two domains to the HSS. It should be noted that, the BOSS may not perform this step, and instead, the conversion device directly obtains the user service data information in the two domains and the association relations thereof from the BOSS.

User registration stage:
In steps 304 to 306, the IPTV user initiates a registration request in the IMS network to the CSCF in the IMS domain through a terminal equipment, for example, a set-top box or a cell phone.
In steps 307 to 308, the CSCF downloads subscription data, and returns 2000K after confirming that the user is a valid IMS subscriber.
In steps 309 to 310, the CSCF triggers a third-party registration to the conversion device.
In steps 311 to 313, the conversion device interacts with the HSS via an Sh interface to obtain a corresponding relation between an SIP universal resource identifier (URI) and a conventional IPTV user name, and saves the corresponding relation. That is to say, the conversion device obtains and saves the currently registered IMS user name and the corresponding IPTV user name and password, and returns a response message indicating that the registration is successful to the CSCF.

After the registration is successfully completed, through a subscription-notification mode, service related information is delivered to the terminal in a Notify message, and the service related information includes, for example, an address of the EPG server and an issue number of an EPG channel list. The set-top box may re-determine whether to download and update the EPG channel list or not according to the issue number of the EPG channel list.

User subscription stage:
In steps 314 to 315, after the registration of the IPTV user is successfully completed, the terminal (for example, the set-top box or the cell phone) initiates an IPTV information subscription request to the conversion device through the CSCF, in which the request message is an SIP message, and the subscription request message carries the SIP URI and other identifiers of the terminal.
In step 316, the conversion device converts the SIP subscription message to a private message format, for example, an HTTP message, converts the SIP URI in the request message to a private user ID, a password, and other authentication information in the IPTV system, and sends the message to the IPTV AAC.
In steps 317 to 319, the IPTV AAC returns an authentication result to the terminal after authenticating the user. In steps 320 to 324, the conversion device sends a response indicating whether the authentication is successful or not to the terminal through a Notify message.

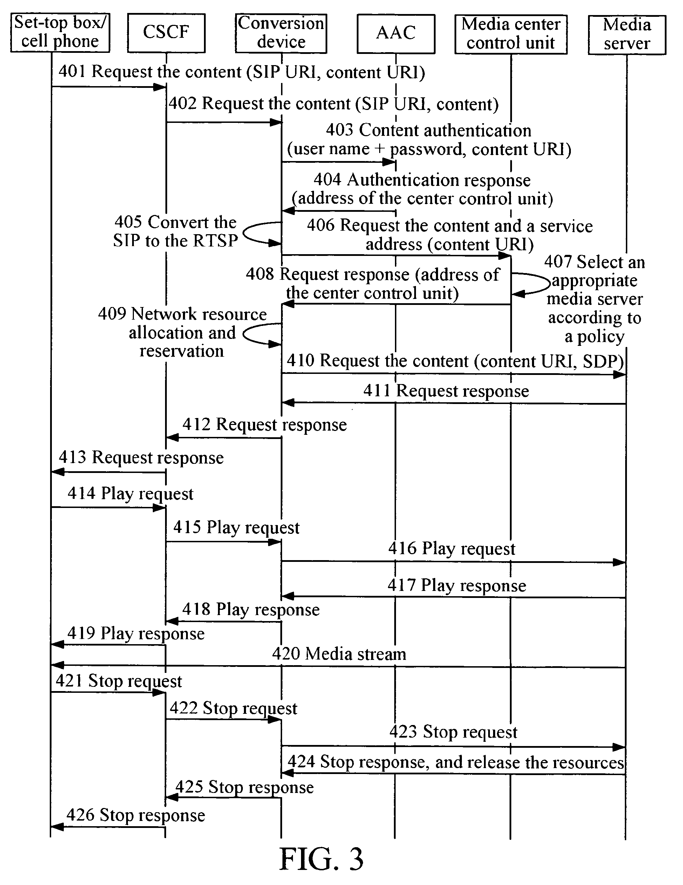

FIG. 3 shows the implementation of an on-demand IPTV service by applying the above system, which includes the following steps.

In steps 401 to 402, when a program is to be consumed through the set-top box or the cell phone terminal, the program is first clicked, and an SIP Invite message carrying a user SIP URI ID and requested content is sent to the conversion device through the CSCF. The requested content includes a uniform resource locator (URL), a session description protocol (SDP) attribute, and other contents.

In step 403, the conversion device converts the SIP message to a private HTTP message of the IPTV system, converts the SIP URI to a private user name of the IPTV system, and uses the information of the private user name, the program URL for service authentication in the IPTV AAC.

In step 404, if the authentication is successful, the AAC returns an authentication response message to the conversion device, in which the message carries address information about the media center control unit.

In steps 405 to 408, according to the address of the media center control unit in the returned message, the conversion device converts the SIP message to an RTSP message, and requests the content and the address URI of the media server from the media center control unit. The media center control unit selects an appropriate media server for providing services according to a corresponding policy, for example, load, health, content, and other status of the media server, and returns an address of the server to the conversion device through a request response.

In step 409, if network resource allocation and reservation are initiated by the CSCF, the network resource allocation and reservation are implemented by a network equipment (for example, a router).

In steps 410 to 413, the conversion device requests the content from the media server in the conventional RTSP message format according to the address of the returned message, and carries media session description information SDP, for example, a coding format and a code rate. After allocating the session resources, the media server returns a response message to the conversion device. The conversion device further converts the RTSP message to the SIP message, and returns the response message to the terminal through the CSCF. Here, the media server successfully sets up a session with the terminal.

In steps 414 to 420, the terminal sends a play request carrying an instruction that indicates a play operation to the conversion device through the CSCF. The conversion device converts the SIP session to an RTSP play command, and sends the command to the media server. The media server returns a play response to the conversion device. The conversion device converts the RTSP message to the SIP message, and returns the play response message to the CSCF. The media server transmits a media stream to the terminal according to the play request.

In steps 421 to 426, when the user needs to stop playing the media, a stop playing request message carrying an instruction that indicates to stop playing is sent to the conversion device through the CSCF. The conversion device converts the SIP session to an RTSP stop playing command, and sends the command to the media server. The media server releases the session resources according to the stop playing request message, and stops transmitting the media stream to the terminal.

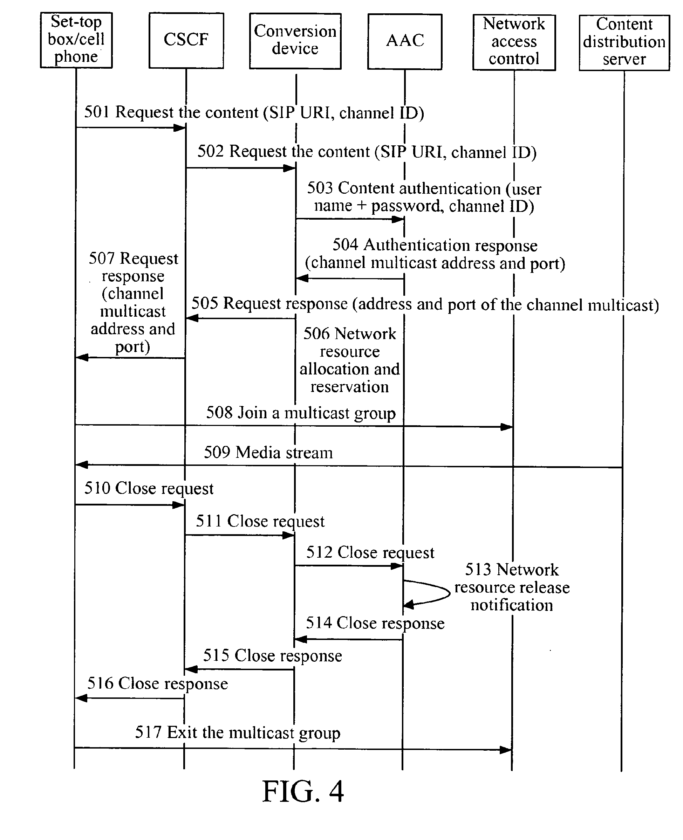

FIG. 4 shows the implementation of a live IPTV service by applying the above system, which includes the following steps.

In steps 501 to 502, when a live program is to be consumed through the set-top box or the cell phone terminal, the program is first clicked, and an SIP Invite message carrying a user SIP URI ID and a channel ID is sent to the conversion device through the CSCF.

In step 503, the conversion device converts the SIP message to a private HTTP message in the IPTV system, converts the SIP URI to a private user name in the IPTV system, and carries the private user name, the password, the channel ID, and other information to the AAC for service authentication.

In steps 504 to 507, if the AAC authentication is successful, the AAC returns an authentication response message carrying a channel multicast parameter (for example, an address or port) to the conversion device, and transmits the authentication response message to the terminal after a message conversion.

In steps 508 to 509, the terminal joins a multicast group through a multicast control protocol. After a successful joining, the terminal receives the media content transmitted from a content distribution server.

In steps 510 to 516, when the channel needs to be closed, the terminal sends a close request to the conversion device through the CSCF. The conversion device converts the SIP request to an HTTP message, and transmits the HTTP message to the AAC. The AAC notifies a related unit to release the session resources and returns a close response.

It should be noted that, for the response message in this embodiment, the protocol based on the IPTV system needs to be converted to the SIP based on the IMS by the conversion device, and then the message is transmitted to the terminal through the CSCF.

In step 517, the terminal exits the multicast group according to the received close response.

It should be noted that, in order to improve the live channel access efficiency, the channel access authorization may be performed in batches, for example, the user is authenticated after registration, and a list of all the channels to which the user has access authority is delivered to the terminal. In this manner, the authorization does not need to be performed each time the channel is switched. For example, after the registration in steps 311 to 313 in the above embodiment is completed, the channel list to which the user has access authority is transmitted to the terminal through the Notify message.

It can be seen from the above description of the embodiment that, a conversion device is added between the conventional IPTV system and the IMS, so as to solve the problem in the prior art that a thorough and overall modification must be performed on the existing network system, thereby realizing interworking between the conventional IPTV system and the IMS, and achieving smooth upgrading of the IPTV system in the IMS network.

Those of ordinary skill in the art should understand that that all or a part of processes in the method according to the embodiments may be implemented by a computer program instructing relevant hardware. The program may be stored in a computer readable storage medium. When the program is executed, the processes of the method according to the embodiments of the present invention are performed. The storage medium may be a magnetic disk, an optical disk, a read-only memory (ROM), or a random access memory (RAM).

It will be apparent to those skilled in the art that various modifications and variations can be made to the present invention.

## Claims

1. A system for realizing an Internet Protocol television, IPTV, service, comprising an IPTV application server, IPTV AS_{,} comprising an electronic program guide, EPG, server and an authentication and authorization center, AAC, and a content distribution and storage system comprising a media center control unit and a media service unit, wherein the system further comprises:
a conversion device, adapted to receive a message sent by a user terminal in a protocol format based on an IP multimedia subsystem, IMS, convert the message between a message in the protocol format based on IMS and a message in a protocol format based on an IPTV system, and transmit the converted message in the protocol format based on the IPTV system to the IPTV AS and the content distribution and storage system according to a content of the message:
wherein convert the messages between a message in the protocol format based on IMS and a message in a protocol format based on an IPTV system comprises:
convert the message in a Session Initiation Protocol, SIP, format based on the IMS to a message in a private protocol format based on the IPTV system during a service control process; and
convert the message in the Session Initiation Protocol, SIP, format based on the IMS to a message in the Real Time Streaming Protocol, RTSP, format based on the IPTV system during a media session control process;
wherein the transmit the converted message in the protocol format based on the IPTV system to the IPTV AS and the content distribution and storage system according to a content of the message comprises:
transmit the converted message in a private protocol format based on the IPTV system to the EPG or the AAC in the IPTV AS of the IPTV system; and
transmit the converted message in the Real Time Streaming Protocol, RTSP to the content distribution and storage system in the IPTV system.

2. The system for realizing an IPTV service of claim 1, wherein the system further comprises:
a home subscriber server, HSS, adapted to store a user service data of the user in the IMS and the IPTV system and an association relations between the user service data in the two domains, wherein the user service data comprises a user ID;
the conversion device, further adapted to acquire the user service data of the user in the two domains and the association relation between the user service data in the two domains from the HSS, store the user service data and the association relation, and convert the user ID between the acquired user ID in the IMS and a user ID in the IPTV system.

3. The system for realizing an IPTV service of claim 1, wherein the system further comprises:
a business and operation support system, BOSS, adapted to store a user service data of the user in the IMS and the IPTV system and an association relation between the user service data in the two domains, wherein the user service data comprises a user ID; and
the conversion device, further adapted to acquire the user service data of the user in the two domains and an association relation between the user service data in the two domains from the BOSS, store the user service data and the association relations, and convert the acquired user ID in the IMS to a user ID in the IPTV domain.

4. The system for realizing an IPTV service of claim 2, wherein the user ID in the IMS is an SIP universal resource identifier, URI, and the user ID in the IPTV system is a private user name of the IPTV system;
wherein convert the user ID between the acquired user ID in the IMS and a user ID in the IPTV system comprises converts the SIP URI to a private user name of the IPTV system during the implementation of an on-demand IPTV service or a live IPTV service; and
wherein the private user name of the IPTV system is sent to the authentication and authorization center, AAC, in the content distribution and storage system for a service authentication during the implementation of an on-demand IPTV service or a live IPTV service.

5. A conversion device, which is applied to an Internet Protocol television, IPTV, service based on an IP multimedia subsystem, IMS, service control system comprising an IPTV application server. IPTV AS, comprising an electronic program guide, EPG, server and an authentication and authorization center , AAC, and a content distribution and storage system comprising a media center control unit and a media service units, wherein the conversion device comprises:
a receiving unit, adapted to receive a message in a protocol format based on IMS sent by a user terminal;
a conversion unit, adapted to convert the message between a message in the protocol format based on IMS and a message in a protocol format based on an IPTV system; and
a request processing unit, adapted to transmit the converted message in the protocol format based on the IPTV system to a corresponding entity in the IPTV system according to the content of the message:
wherein convert the messages between a message in the protocol format based on IMS and a message in a protocol format based on an IPTV system comprises:
convert the message in a Session Initiation Protocol, SIP, format based on the IMS to a message in a private protocol format based on the IPTV system during a service control process; and
convert the message in the Session Initiation Protocol, SIP, format based on the IMS to a message in the Real Time Streaming Protocol, RTSP, format based on the IPTV system during a media session control process;
wherein transmit the converted message in the protocol format based on the IPTV system to a corresponding entity in the IPTV system according to the content of the message comprises:
transmit the converted message in a private protocol format based on the IPTV system to the EPG or the AAC in the IPTV AS of the IPTV system; and
transmit the converted message in the Real Time Streaming Protocol, RTSP to the content distribution and storage system in the IPTV system.

6. The conversion device of claim 5, wherein the conversion device further comprises:
an information acquisition unit, adapted to acquire and store a user service data of the user in the IMS and the IPTV system and an association relation between the user service data in the two domains, wherein the user service data comprises a user ID; and
the conversion unit, further adapted to convert the user ID between the user ID in the user service data in the IMS and a user ID in the user service data in the IPTV system.

7. The conversion device of claim 6, wherein the request processing unit is further adapted to transmit a converted response message returned from the corresponding entity in the IPTV system in the protocol format based on IMS to the user terminal.

8. The conversion device of claim 6, wherein the user ID in the IMS. is an SIP universal resource identifier, URI, and the user ID in the IPTV system is a private user name of the IPTV system;
wherein convert the user ID between the acquired user ID in the IMS and a user will in the IPTV system comprises: converts the SIP URI to a private user name of the IPTV system during the implementation of an on-demand IPTV service or a live IPTV service;
wherein the private user name of the IPTV system is sent to the authentication and authorization center, AAC, in the content distribution and storage system for a service authentication during the implementation of an on-demand IPTV service or a live IPTV service.

9. A method for realizing an Internet Protocol television, IPTV, service which is applied to an Internet Protocol television, IPTV, service based on an IP multimedia subsystem, IMS, service control system comprising an IPTV application server, IPTV AS comprising an electronic program guide, EPG, server and an authentication and authorization center, AAC, and a content distribution and storage system comprising a media center control unit and a media service units, comprising:
receiving a message sent by a user terminal in a protocol format based on an IP multimedia subsystem, IMS;
converting the message between a message in the protocol format based on the IMS and a message in a protocol format based on an IPTV system; and
transmitting the converted message in the protocol format based on the IPTV system to a corresponding entity in the IPTV system according to the content of the message:
wherein converting the messages between a message in the protocol format based on IMS and a message in a protocol format based on an IPTV system comprises:
converting the message in a Session Initiation Protocol, SIP, format based on the IMS to a message in a private protocol format based on the IPTV- system during a service control process; and
converting the message in the Session Initiation Protocol, SIP, format based on the IMS to a message in the Real Time Streaming Protocol, RTSP, format based on the IPTV system during a media session control process;
wherein transmitting the converted message in the protocol format based on the IPTV system to a corresponding entity in the IPTV system according to the content of the message comprises:
transmitting the converted message in a private protocol format based on the IPTV system to the EPG or the AAC in the IPTV AS of the IPTV system; and
transmitting the converted message in the Real Time Streaming Protocol, RTSP to the content distribution and storage system in the IPTV system.

10. The method for realizing an IPTV service of claim 9, further comprising:
acquiring and saving the user service data of the user in the IMS and the IPTV system and the association relations between the user service data in the two domains, wherein the user service data comprises a user ID; and
converting the user ID of the user service data in the IMS to a user ID in the IPTV system.

11. The method for realizing an IPTV service of claim 10, wherein the user ID in the IMS is an SIP universal resource identifier, URI, and the user ID in the IPTV system is a private user name of the IPTV system;
wherein converting the user ID of the user service data in the IMS to a user ID in the IPTV system comprises: converting the SIP URI to a private user name of the IPTV system during the implementation of an on-demand IPTV service or a live IPTV service;
wherein the private user name of the IPTV system is sent to the authentication and authorization center, AAC, in the content distribution and storage system for a service authentication during the implementation of an on-demand IPTV service or a live IPTV service.

12. The method for realizing an IPTV service of claim 10, wherein
if the message received from the user terminal is a subscription request message, the converting the message between the message in the protocol format based on the IMS and a message in a protocol format based on an IPTV system further comprises: converting the request message in the Session Initiation Protocol, SIP, format based on the IMS to a request message in the private protocol format based on the IPTV system;
the transmitting the converted message in the protocol format based on the IPTV system to a corresponding entity in the IPTV system according to the content of the message further comprises: sending the request message in the private protocol format based on the IPTV system to an authentication and authorization center, AAC.

13. The method for realizing an IPTV service of claim 10, wherein
if the message received from the user terminal is a content request message, the converting the message between the message in the protocol format based on the IMS and a message in a protocol format based on an IPTV system further comprises: converting the request message in the SIP format based on the IMS to a request message in the Real Time Streaming Protocol, RTSP, format based on the IPTV system;
the transmitting the converted message in the protocol format based on the IPTV system to a corresponding entity in the IPTV system according to the content of the message further comprises: transmitting the request message in the RTSP format based on the IPTV system to a content distribution and storage system.

14. The method for realizing an IPTV service of claim 13, wherein if the content request message is an on-demand request message, the converting and transmitting steps further comprise:
converting the message in the SIP format based on the IMS to a message in a Hypertext Transfer Protocol, HTTP, format and a message in the RTSP format based on the IPTV system, sending the converted message in the HTTP format to the AAC, and receiving an authentication response message returned from the AAC;
sending the converted message in the RTSP format to a media center control unit for requesting an address of media server according to the address of the media center control unit in the authentication response message, and receiving the address of media server returned from the media center control unit; and
sending the request message in the RTSP format to the media server for requesting on-demand content according to the address of media server.

15. The method for realizing an IPTV service of claim 13, wherein if the content request message is a live program request message, the converting message between a message in the protocol format based on the IMS and a message in a protocol format based on an IPTV system, transmitting the converted message in the protocol format based on the IPTV system to a corresponding entity in the IPTV system according to the content of the message further comprises:
converting the message in the SIP format based on the IMS to a message in the HTTP format based on the IPTV system, sending the converted message in the HTTP format to the AAC, and receiving a authentication response message returned from the AAC; and
converting the authentication response message returned from the AAC to a message in the SIP format, sending the message in the SIP format to the user terminal, the message comprising a multicast address, wherein the multicast address is used by the user terminal for joining a multicast group.

16. A computer program readable medium, comprising computer program code, which, when executed by a computer unit, will cause the computer unit to perform the steps according to claim 9-15.

## Patentansprüche

1. System zum Realisieren eines Dienstes des Internet-Protokoll-Fernsehens IPTV, umfassend einen IPTV-Anwendungsserver IPTV AS mit einem Server für die elektronische Programmzeitschrift EPG und einer Authentifikations- und Autorisierungszentrale AAC und ein Inhaltsverteilungs- und Speichersystem mit einer Medienzentralen-Steuereinheit und einer Mediendiensteinheit, wobei das System ferner Folgendes umfasst:
eine Umsetzungseinrichtung, die dafür ausgelegt ist, eine durch ein Benutzerendgerät in einem Protokollformat auf der Basis eines IP Multimedia Subsystem IMS gesendete Nachricht zu empfangen, die Nachricht zwischen einer Nachricht in dem Protokollformat auf der Basis des IMS und einer Nachricht in einem Protokollformat auf der Basis eines IPTV-Systems umzusetzen und die umgesetzte Nachricht in dem Protokollformat auf der Basis des IPTV-Systems gemäß einem Inhalt der Nachricht zu dem IPTV AS und dem Inhaltsverteilungs- und Speichersystem zu übertragen;
wobei das Umsetzen der Nachrichten zwischen einer Nachricht in dem Protokollformat auf der Basis des IMS und einer Nachricht in einem Protokollformat auf der Basis eines IPTV-Systems Folgendes umfasst:
Umsetzen der Nachricht in einem Format des Session Initiation Protocol SIP auf der Basis des IMS in eine Nachricht in einem privaten Protokollformat auf der Basis des IPTV-Systems während eines Dienststeuerprozesses; und
Umsetzen der Nachricht in dem Format des Session Initiation Protocol SIP auf der Basis des IMS in eine Nachricht in dem Format des Real Time Streaming Protocol RTSP auf der Basis des IPTV-Systems während eines Mediensitzungssteuerprozesses;
wobei das Übertragen der umgesetzten Nachricht in dem Protokollformat auf der Basis des IPTV-Systems zu dem IPTV AS und dem Inhaltsverteilungs- und Speichersystem gemäß einem Inhalt der Nachricht Folgendes umfasst:
Übertragen der umgesetzten Nachricht in einem privaten Protokollformat auf der Basis des IPTV-Systems zu der EPG oder der AAC in dem IPTV AS des IPTV-Systems; und
Übertragen der umgesetzten Nachricht in dem Real Time Streaming Protocol RTSP zu dem Inhaltsverteilungs- und Speichersystem in dem IPTV-System.

2. System zum Realisieren eines IPTV-Dienstes nach Anspruch 1, wobei das System ferner Folgendes umfasst:
einen Home Subscriber Server HSS, der dafür ausgelegt ist, Benutzerdienstdaten des Benutzers in dem IMS und dem IPTV-System und eine Assoziationsbeziehung zwischen den Benutzerdienstdaten in den beiden Domänen zu speichern, wobei die Benutzerdienstdaten eine Benutzer-ID umfassen;
die Umsetzungseinrichtung, die ferner dafür ausgelegt ist, die Benutzerdienstdaten des Benutzers in den beiden Domänen und die Assoziationsbeziehung zwischen den Benutzerdienstdaten in den beiden Domänen von dem HSS zu beschaffen, die Benutzerdienstdaten und die Assoziationsbeziehung zu speichern und die Benutzer-ID zwischen der beschafften Benutzer-ID in dem IMS und einer Benutzer-ID in dem IPTV-System umzusetzen.

3. System zum Realisieren eines IPTV-Dienstes nach Anspruch 1, wobei das System ferner Folgendes umfasst:
ein Business and Operation Support System BOSS, das dafür ausgelegt ist,
Benutzerdienstdaten des Benutzers in dem IMS und dem IPTV-System und einer Assoziationsbeziehung zwischen den Benutzerdienstdaten in den beiden Domänen zu speichern, wobei die Benutzerdienstdaten eine Benutzer-ID umfassen; und
die Umsetzungseinrichtung, die ferner dafür ausgelegt ist, die Benutzerdienstdaten des Benutzers in den beiden Domänen und eine Assoziationsbeziehung zwischen den Benutzerdienstdaten in den beiden Domänen von dem BOSS zu beschaffen, die Benutzerdienstdaten und die Assoziationsbeziehungen zu speichern und die beschaffte Benutzer-ID in dem IMS in eine Benutzer-ID in der IPTV-Domäne umzusetzen.

4. System zum Realisieren eines IPTV-Dienstes nach Anspruch 2, wobei die Benutzer-ID in dem IMS ein Universal Resource Identifier URI des SIP ist und die Benutzer-ID in dem IPTV-System ein Privatbenutzername des IPTV-Systems ist;
wobei das Umsetzen der Benutzer-ID zwischen der beschafften Benutzer-ID in dem IMS und einer Benutzer-ID in dem IPTV-System das Umsetzen der SIP URI in einen Privatbenutzernamen des IPTV-Systems während der Implementierung eines On-Demand-IPTV-Dienstes oder eines Live-IPTV-Dienstes umfasst; und
wobei der Privatbenutzername des IPTV-Systems zu der Authentifikations- und Autorisierungszentrale AAC in dem Inhaltsverteilungs- und Speichersystem für eine Dienstauthentifikation während der Implementierung eines On-Demand-IPTV-Dienstes oder eines Live-IPTV-Dienstes gesendet wird.

5. Umsetzungseinrichtung, die auf einen Dienst des Internet-Protokoll-Fernsehens IPTV auf der Basis eines Dienststeuersystems des IP Multimedia Subsystem IMS angewandt wird, umfassend einen IPTV-Anwendungsserver IPTV AS mit einem Server für die elektronische Programmzeitschrift EPG und einer Authentifikationsund Autorisierungszentrale AAC und ein Inhaltsverteilungs- und Speichersystem mit einer Medienzentralen-Steuereinheit und einer Mediendiensteinheit, wobei die Umsetzungseinrichtung Folgendes umfasst:
eine Empfangseinheit, die dafür ausgelegt ist, eine durch ein Benutzerendgerät gesendete Nachricht in einem Protokollformat auf der Basis des IMS zu empfangen;
eine Umsetzungseinheit, die dafür ausgelegt ist, die Nachricht zwischen einer Nachricht in dem Protokollformat auf der Basis des IMS und einer Nachricht in einem Protokollformat auf der Basis eines IPTV-Systems umzusetzen; und
eine Anforderungsverarbeitungseinheit, die dafür ausgelegt ist, die umgesetzte Nachricht in dem Protokollformat auf der Basis des IPTV-Systems gemäß dem Inhalt der Nachricht zu einer entsprechenden Entität in dem IPTV-System zu übertragen;
wobei das Umsetzen der Nachrichten zwischen einer Nachricht in dem Protokollformat auf der Basis des IMS und einer Nachricht in einem Protokollformat auf der Basis eines IPTV-Systems Folgendes umfasst:
Umsetzen der Nachricht in einem Format des Session Initiation Protocol SIP auf der Basis des IMS in eine Nachricht in einem privaten Protokollformat auf der Basis des IPTV-Systems während eines Dienststeuerprozesses; und
Umsetzen der Nachricht in dem Format des Session Initiation Protocol SIP auf der Basis des IMS in eine Nachricht in dem Format des Real Time Streaming Protocol RTSP auf der Basis des IPTV-Systems während eines MediensitzungsSteuerprozesses;
wobei das Übertragen der umgesetzten Nachricht in dem Protokollformat auf der Basis des IPTV-Systems zu einer entsprechenden Entität in dem IPTV-System gemäß dem Inhalt der Nachricht Folgendes umfasst:
Übertragen der umgesetzten Nachricht in einem privaten Protokollformat auf der Basis des IPTV-Systems zu der EPG oder der AAC in dem IPTV AS des IPTV-Systems; und
Übertragen der umgesetzten Nachricht in dem Real Time Streaming Protocol RTSP zu dem Inhaltsverteilungs- und Speichersystem in dem IPTV-System.

6. Umsetzungseinrichtung nach Anspruch 5, wobei die Umsetzungseinrichtung ferner Folgendes umfasst:
eine Informationsbeschaffungseinheit, die dafür ausgelegt ist, Benutzerdienstdaten des Benutzers in dem IMS und dem IPTV-System und eine Assoziationsbeziehung zwischen den Benutzerdienstdaten in den beiden Domänen zu beschaffen und zu speichern, wobei die Benutzerdienstdaten eine Benutzer-ID umfassen; und
die Umsetzungseinheit, die ferner dafür ausgelegt ist, die Benutzer-ID zwischen der Benutzer-ID in den Benutzerdienstdaten in dem IMS und einer Benutzer-ID in den Benutzerdienstdaten in dem IPTV-System umzusetzen.

7. Umsetzungseinrichtung nach Anspruch 6, wobei die Anforderungsverarbeitungseinheit ferner dafür ausgelegt ist, eine von der entsprechenden Entität in dem IPTV-System zurückgegebene umgesetzte Antwortnachricht in dem Protokollformat auf der Basis des IMS zu dem Benutzerendgerät zu übertragen.

8. Umsetzungseinrichtung nach Anspruch 6, wobei die Benutzer-ID in dem IMS ein Universal Resource Identifier URI des SIP ist und die Benutzer-ID in dem IPTV-System ein Privatbenutzername des IPTV-Systems ist;
wobei das Umsetzen der Benutzer-ID zwischen der beschafften Benutzer-ID in dem IMS und einer Benutzer-ID in dem IPTV-System Folgendes umfasst: Umsetzen des SIP URI in einen Privatbenutzernamen des IPTV-Systems während der Implementierung eines On-Demand-IPTV-Dienstes oder eines Live-IPTV-Dienstes; wobei der Privatbenutzername des IPTV-Systems zu der Authentifikations- und Autorisierungszentrale AAC in dem Inhaltsverteilungs- und Speichersystem für eine Dienstauthentifikation während der Implementierung eines On-Demand-IPTV-Dienstes oder eines Live-IPTV-Dienstes gesendet wird.

9. Verfahren zum Realisieren eines Dienstes des Internet-Protokoll-Fernsehens IPTV, das auf einen Dienst des Internet-Protokoll-Fernsehens IPTV auf der Basis eines Dienststeuersystems des IP Multimedia Subsystem IMS angewandt wird, umfassend einen IPTV-Anwendungsserver IPTV AS mit einem Server für die elektronische Programmzeitschrift EPG und einer Authentifikations- und Autorisierungszentrale AAC und ein Inhaltsverteilungs- und Speichersystem mit einer Medienzentralen-Steuereinheit und einer Mediendiensteinheit, mit den folgenden Schritten:
Empfangen einer durch ein Benutzerendgerät gesendeten Nachricht in einem Protokollformat auf der Basis eines IP Multimedia Subsystem IMS;
Umsetzen der Nachricht zwischen einer Nachricht in dem Protokollformat auf der Basis des IMS und einer Nachricht in einem Protokollformat auf der Basis des IPTV-Systems; und
Übertragen der umgesetzten Nachricht in dem Protokollformat auf der Basis des IPTV-Systems zu einer entsprechenden Entität in dem IPTV-System gemäß dem Inhalt der Nachricht;
wobei das Umsetzen der Nachrichten zwischen einer Nachricht in dem Protokollformat auf der Basis des IMS und einer Nachricht in einem Protokollformat auf der Basis eines IPTV-Systems Folgendes umfasst:
Umsetzen der Nachricht in einem Format des Session Initiation Protocol SIP auf der Basis des IMS in eine Nachricht in einem privaten Protokollformat auf der Basis des IPTV-Systems während eines Dienststeuerprozesses; und
Umsetzen der Nachricht in dem Format des Session Initiation Protocol SIP auf der Basis des IMS in eine Nachricht in dem Format des Real Time Streaming Protocol RTSP auf der Basis des IPTV-Systems während eines MediensitzungsSteuerprozesses;
wobei das Übertragen der umgesetzten Nachricht in dem Protokollformat auf der Basis des IPTV-Systems zu einer entsprechenden Entität in dem IPTV-System gemäß dem Inhalt der Nachricht Folgendes umfasst:
Übertragen der umgesetzten Nachricht in einem privaten Protokollformat auf der Basis des IPTV-Systems zu der EPG oder der AAC in dem IPTV AS des IPTV-Systems; und
Übertragen der umgesetzten Nachricht in dem Real Time Streaming Protocol RTSP zu dem Inhaltsverteilungs- und Speichersystem in dem IPTV-System.

10. Verfahren zum Realisieren eines IPTV-Dienstes nach Anspruch 9, ferner mit den folgenden Schritten:
Beschaffen und Abspeichern der Benutzerdienstdaten des Benutzers in dem IMS und dem IPTV-System und der Assoziationsbeziehungen zwischen den Benutzerdienstdaten in den beiden Domänen, wobei die Benutzerdienstdaten eine Benutzer-ID umfassen; und
Umsetzen der Benutzer-ID der Benutzerdienstdaten in dem IMS in eine Benutzer-ID in dem IPTV-System.

11. Verfahren zum Realisieren eines IPTV-Dienstes nach Anspruch 10, wobei die Benutzer-ID in dem IMS ein Universal Resource Identifier URI des SIP ist und die Benutzer-ID in dem IPTV-System ein Privatbenutzername des IPTV-Systems ist; wobei das Umsetzen der Benutzer-ID der Benutzerdienstdaten in dem IMS in eine Benutzer-ID in dem IPTV-System Folgendes umfasst: Umsetzen des SIP URI in einen Privatbenutzernamen des IPTV-Systems während der Implementierung eines On-Demand-IPTV-Dienstes oder eines Live-IPTV-Dienstes;
wobei der Privatbenutzername des IPTV-Systems zu der Authentifikations- und Autorisierungszentrale AAC in dem Inhaltsverteilungs- und Speichersystem für eine Dienstauthentifikation während der Implementierung eines On-Demand-IPTV-Dienstes oder eines Live-IPTV-Dienstes gesendet wird.

12. Verfahren zum Realisieren eines IPTV-Dienstes nach Anspruch 10, wobei wenn die von dem Benutzerendgerät empfangene Nachricht eine Subskriptionsanforderungsnachricht ist, das Umsetzen der Nachricht zwischen der Nachricht in dem Protokollformat auf der Basis des IMS und einer Nachricht in einem Protokollformat auf der Basis eines IPTV-Systems ferner Folgendes umfasst:
Umsetzen der Anforderungsnachricht in dem Format des Session Initiation Protocol SIP auf der Basis des IMS in eine Anforderungsnachricht in dem privaten Protokollformat auf der Basis des IPTV-Systems;
und das Übertragen der umgesetzten Nachricht in dem Protokollformat auf der Basis des IPTV-Systems zu einer entsprechenden Entität in dem IPTV-System gemäß dem Inhalt der Nachricht ferner Folgendes umfasst: Senden der Anforderungsnachricht in dem privaten Protokollformat auf der Basis des IPTV-Systems zu einer Authentifikations- und Autorisierungszentrale AAC.

13. Verfahren zum Realisieren eines IPTV-Dienstes nach Anspruch 10, wobei wenn die von dem Benutzerendgerät empfangene Nachricht eine Inhaltsanforderungsnachricht ist, das Umsetzen der Nachricht zwischen der Nachricht in dem Protokollformat auf der Basis des IMS und einer Nachricht in einem Protokollformat auf der Basis eines IPTV-Systems ferner Folgendes umfasst:
Umsetzen der Anforderungsnachricht in dem SIP-Format auf der Basis des IMS in eine Anforderungsnachricht in dem Format des Real Time Streaming Protocol RTSP auf der Basis des IPTV-Systems;
und das Übertragen der umgesetzten Nachricht in dem Protokollformat auf der Basis des IPTV-Systems zu einer entsprechenden Entität in dem IPTV-System gemäß dem Inhalt der Nachricht ferner Folgendes umfasst: Übertragen der Anforderungsnachricht in dem RTSP-Format auf der Basis des IPTV-Systems zu einem Inhaltsverteilungs- und Speichersystem.

14. Verfahren zum Realisieren eines IPTV-Dienstes nach Anspruch 13, wobei, wenn die Inhaltsanforderungsnachricht eine On-Demand-Anforderungsnachricht ist, die Schritte des Umsetzens und Übertragens ferner Folgendes umfassen:
Umsetzen der Nachricht in dem SIP-Format auf der Basis des IMS in eine Nachricht in einem Format des Hypertext Transfer Protocol HTTP und eine Nachricht in dem RTSP-Format auf der Basis des IPTV-Systems, Senden der umgesetzten Nachricht in dem HTTP-Format zu der AAC und Empfangen einer von der AAC zurückgegebenen Authentifikationsantwortnachricht;
Senden der umgesetzten Nachricht in dem RTSP-Format zu einer Medienzentralen-Steuereinheit zum Anfordern einer Adresse des Medienservers gemäß der Adresse der Medienzentralen-Steuereinheit in der Authentifikationsantwortnachricht und
Empfangen der von der Medienzentralen-Steuereinheit zurückgegebenen Adresse des Medienservers; und
Senden der Anforderungsnachricht in dem RTSP-Format zu dem Medienserver zum Anfordern von On-Demand-Inhalt gemäß der Adresse des Medienservers.

15. Verfahren zum Realisieren eines IPTV-Dienstes nach Anspruch 13, wobei, wenn die Inhaltsanforderungsnachricht eine Live-Programmanforderungsnachricht ist, das Umsetzen der Nachricht zwischen einer Nachricht in dem Protokollformat auf der Basis des IMS und einer Nachricht in einem Protokollformat auf der Basis eines IPTV-Systems und das Übertragen der umgesetzten Nachricht in dem Protokollformat auf der Basis des IPTV-Systems zu einer entsprechenden Entität in dem IPTV-System gemäß dem Inhalt der Nachricht ferner Folgendes umfasst:
Umsetzen der Nachricht in dem SIP-Format auf der Basis des IMS in eine Nachricht in dem HTTP-Format auf der Basis des IPTV-Systems, Senden der umgesetzten Nachricht in dem HTTP-Format zu der AAC und Empfangen einer von der AAC zurückgegebenen Authentifikationsantwortnachricht; und
Umsetzen der von der AAC zurückgegebenen Authentifikationsantwortnachricht in eine Nachricht in dem SIP-Format, Senden der Nachricht in dem SIP-Format zu dem Benutzerendgerät, wobei die Nachricht eine Multicast-Adresse umfasst, wobei die Multicast-Adresse von dem Benutzerendgerät verwendet wird, um sich einer Multicast-Gruppe anzuschließen.

16. Computerprogrammlesbares Medium, das Computerprogrammcode umfasst, der, wenn er durch eine Computereinheit ausgeführt wird, bewirkt, dass die Computereinheit die Schritte nach Anspruch 9 bis 15 ausführt.

## Revendications

1. Système de réalisation d'un service de télévision à Protocole Internet, IPTV, comprenant un serveur d'application IPTV, ou IPTV AS, comprenant un serveur de guide de programme électronique, ou EPG, et un centre d'authentification et d'autorisation, ou AAC, et un système de distribution et de stockage de contenu comprenant une unité de commande de centre multimédia et une unité de service multimédia, le système comprenant en outre :
un dispositif de conversion, adapté pour recevoir un message envoyé par un terminal utilisateur dans un format de protocole basé sur un sous-système multimédia IP, ou IMS, convertir le message entre un message au format de protocole basé sur l'IMS et
un message dans un format de protocole basé sur un système IPTV, et transmettre le message converti dans le format de protocole basé sur le système IPTV à l'IPTV AS et au système de distribution et de stockage de contenu en fonction d'un contenu du message ;
dans lequel la conversion des messages entre un message au format de protocole basé sur l'IMS et un message dans un format de protocole basé sur un système IPTV comprend :
la conversion du message ayant un format de Protocole de Lancement de Session, SIP, basé sur l'IMS en un message dans un format de protocole privé basé sur le système IPTV durant un processus de commande de service ; et
la conversion du message au format de Protocole de Lancement de Session, SIP, basé sur l'IMS en un message au format de Protocole de Diffusion Continue en Temps Réel, RTSP, basé sur le système IPTV durant un processus de commande de session multimédia ;
dans lequel la transmission du message converti dans le format de protocole basé sur le système IPTV à l'IPTV AS et au système de distribution et de stockage de contenu en fonction d'un contenu du message comprend :
la transmission du message converti dans un format de protocole privé basé sur le système IPTV à l'EPG ou à l'AAC dans l'IPTV AS du système IPTV ; et
la transmission du message converti dans le format de Protocole de Diffusion Continue en Temps Réel, RTSP, au système de distribution et de stockage de contenu dans le système IPTV.

2. Système de réalisation d'un service IPTV selon la revendication 1, le système comprenant en outre :
un serveur d'abonnés de rattachement, HSS, adapté pour stocker les données de service utilisateur de l'utilisateur dans l'IMS et le système IPTV et une relation d'association entre les données de service utilisateur dans les deux domaines, les données de service utilisateur comprenant une ID d'utilisateur ;
le dispositif de conversion, adapté en outre pour acquérir les données de service utilisateur de l'utilisateur dans les deux domaines et la relation d'association entre les données de service utilisateur dans les deux domaines depuis le HSS, stocker les données de service utilisateur et la relation d'association, et convertir l'ID d'utilisateur entre l'ID d'utilisateur acquise dans l'IMS et une ID d'utilisateur dans le système IPTV.

3. Système de réalisation d'un service IPTV selon la revendication 1, le système comprenant en outre :
un système de support d'affaires et d'exploitation, BOSS, adapté pour stocker les données de service utilisateur de l'utilisateur dans l'IMS et le système IPTV et une relation d'association entre les données de service utilisateur dans les deux domaines, les données de service utilisateur comprenant une ID d'utilisateur ; et
le dispositif de conversion, adapté en outre pour acquérir les données de service utilisateur de l'utilisateur dans les deux domaines et une relation d'association entre les données de service utilisateur dans les deux domaines depuis le BOSS, stocker les données de service utilisateur et les relations d'association, et convertir l'ID d'utilisateur acquise dans l'IMS en une ID d'utilisateur dans le domaine IPTV.

4. Système de réalisation d'un service IPTV selon la revendication 2, dans lequel l'ID d'utilisateur dans l'IMS est un identifiant de ressource universel, ou URI, SIP, et l'ID d'utilisateur dans le système IPTV est un nom d'utilisateur privé du système IPTV ; dans lequel la conversion de l'ID d'utilisateur entre l'ID d'utilisateur acquise dans l'IMS et une ID d'utilisateur dans le système IPTV comprend la conversion de l'URI SIP en un nom d'utilisateur privé du système IPTV durant la mise en oeuvre d'un service IPTV à la demande ou d'un service IPTV en direct ; et
dans lequel le nom d'utilisateur privé du système IPTV est envoyé au centre d'authentification et d'autorisation, AAC, dans le système de distribution et de stockage de contenu pour une authentification de service durant la mise en oeuvre d'un service IPTV à la demande ou d'un service IPTV en direct.

5. Dispositif de conversion, appliqué à un service de télévision à Protocole Internet, IPTV, basé sur un système de commande de service de sous-système multimédia IP, ou IMS, comprenant un serveur d'application IPTV, ou IPTV AS, comprenant un serveur de guide de programme électronique, ou EPG, et un centre d'authentification et d'autorisation, ou AAC, et un système de distribution et de stockage de contenu comprenant une unité de commande de centre multimédia et une unité de service multimédia, le dispositif de conversion comprenant :
une unité de réception, adaptée pour recevoir un message dans un format de protocole basé sur l'IMS envoyé par un terminal utilisateur ;
une unité de conversion, adaptée pour convertir le message entre un message au format de protocole basé sur l'IMS et un message au format de protocole basé sur un système IPTV ; et
une unité de traitement de demande, adaptée pour transmettre le message converti dans le format de protocole basé sur le système IPTV à une entité correspondante dans le système IPTV en fonction du contenu du message ;
dans lequel la conversion des messages entre un message au format de protocole basé sur l'IMS et un message au format de protocole basé sur un système IPTV comprend :
la conversion du message ayant un format de Protocole de Lancement de Session, SIP, basé sur l'IMS en un message au format de protocole privé basé sur le système IPTV durant un processus de commande de service ; et
la conversion du message au format de Protocole de Lancement de Session, SIP, basé sur l'IMS en un message au format de Protocole de Diffusion Continue en Temps Réel, RTSP, basé sur le système IPTV durant un processus de commande de session multimédia ;
dans lequel la transmission du message converti dans le format de protocole basé sur le système IPTV à une entité correspondante dans le système IPTV en fonction du contenu du message comprend :
la transmission du message converti dans un format de protocole privé basé sur le système IPTV à l'EPG ou à l'AAC dans l'IPTV AS du système IPTV ; et
la transmission du message converti dans le format de Protocole de Diffusion Continue en Temps Réel, RTSP, au système de distribution et de stockage de contenu dans le système IPTV.

6. Dispositif de conversion selon la revendication 5, dans lequel le dispositif de conversion comprend en outre :
une unité d'acquisition d'informations, adaptée pour acquérir et stocker des données de service utilisateur de l'utilisateur dans l'IMS et le système IPTV et une relation d'association entre les données de service utilisateur dans les deux domaines, les données de service utilisateur comprenant une ID d'utilisateur ; et
l'unité de conversion, adaptée en outre pour convertir l'ID d'utilisateur entre l'ID d'utilisateur dans les données de service utilisateur dans l'IMS et une ID d'utilisateur dans les données de service utilisateur dans le système IPTV.

7. Dispositif de conversion selon la revendication 6, dans lequel l'unité de traitement de demande est adaptée en outre pour transmettre au terminal utilisateur un message de réponse converti renvoyé par l'entité correspondante dans le système IPTV dans le format de protocole basé sur l'IMS.

8. Dispositif de conversion selon la revendication 6, dans lequel l'ID d'utilisateur dans l'IMS est un identifiant de ressource universel, ou URI, SIP, et l'ID d'utilisateur dans le système IPTV est un nom d'utilisateur privé du système IPTV ;
dans lequel la conversion de l'ID d'utilisateur entre l'ID d'utilisateur acquise dans l'IMS et une ID d'utilisateur dans le système IPTV comprend : la conversion de l'URI SIP en un nom d'utilisateur privé du système IPTV durant la mise en oeuvre d'un service IPTV à la demande ou d'un service IPTV en direct ;
dans lequel le nom d'utilisateur privé du système IPTV est envoyé au centre d'authentification et d'autorisation, AAC, dans le système de distribution et de stockage de contenu en vue d'une authentification de service durant la mise en oeuvre d'un service IPTV à la demande ou d'un service IPTV en direct.

9. Procédé de réalisation d'un service de télévision à Protocole Internet, IPTV, qui est appliqué à un service de télévision à Protocole Internet, ou IPTV, basé sur un système de commande de service de sous-système multimédia IP, ou IMS, comprenant un serveur d'application IPTV, ou IPTV AS, comprenant un serveur de guide de programme électronique, ou EPG, et un centre d'authentification et d'autorisation, ou AAC, et un système de distribution et de stockage de contenu comprenant une unité de commande de centre multimédia et une unité de service multimédia, le procédé comprenant :
la réception d'un message envoyé par un terminal utilisateur dans un format de protocole basé sur un sous-système multimédia IP, IMS ;
la conversion du message entre un message au format de protocole basé sur l'IMS et
un message au format de protocole basé sur un système IPTV ; et
la transmission du message converti dans le format de protocole basé sur le système IPTV à une entité correspondante dans le système IPTV en fonction du contenu du message ;
dans lequel la conversion du message entre un message au format de protocole basé sur l'IMS et un message au format de protocole basé sur un système IPTV comprend : la conversion du message ayant un format de Protocole de Lancement de Session, SIP, basé sur l'IMS en un message ayant un format de protocole privé basé sur le système IPTV durant un processus de commande de service ; et
la conversion du message au format de Protocole de Lancement de Session, SIP, basé sur l'IMS en un message au format de Protocole de Diffusion Continue en Temps Réel, RTSP, basé sur le système IPTV durant un processus de commande de session multimédia ;
dans lequel la transmission du message converti dans le format de protocole basé sur le système IPTV à une entité correspondante dans le système IPTV en fonction du contenu du message comprend :
la transmission du message converti dans un format de protocole privé basé sur le système IPTV à l'EPG ou à l'AAC dans l'IPTV AS du système IPTV ; et
la transmission du message converti dans le format de Protocole de Diffusion Continue en Temps Réel, RTSP au système de distribution et de stockage de contenu dans le système IPTV.

10. Procédé de réalisation d'un service IPTV selon la revendication 9, comprenant en outre :
l'acquisition et la sauvegarde des données de service utilisateur de l'utilisateur dans l'IMS et le système IPTV et des relations d'association entre les données de service utilisateur dans les deux domaines, les données de service utilisateur comprenant une ID d'utilisateur ; et
la conversion de l'ID d'utilisateur des données de service utilisateur dans l'IMS en une ID d'utilisateur dans le système IPTV.

11. Procédé de réalisation d'un service IPTV selon la revendication 10, dans lequel l'ID d'utilisateur dans l'IMS est un identifiant de ressource universel, ou URI, SIP, et l'ID d'utilisateur dans le système IPTV est un nom d'utilisateur privé du système IPTV ;
dans lequel la conversion de l'ID d'utilisateur des données de service utilisateur dans l'IMS en une ID d'utilisateur dans le système IPTV comprend : la conversion de l'URI SIP en un nom d'utilisateur privé du système IPTV durant la mise en oeuvre d'un service IPTV à la demande ou d'un service IPTV en direct ;
dans lequel le nom d'utilisateur privé du système IPTV est envoyé au centre d'authentification et d'autorisation, AAC, dans le système de distribution et de stockage de contenu en vue d'une authentification de service durant la mise en oeuvre d'un service IPTV à la demande ou d'un service IPTV en direct.

12. Procédé de réalisation d'un service IPTV selon la revendication 10, dans lequel :
si le message reçu du terminal utilisateur est un message de demande d'abonnement,
la conversion du message entre le message au format de protocole basé sur l'IMS et un message dans un format de protocole basé sur un système IPTV comprend en outre : la conversion du message de demande au format de Protocole de Lancement de Session, SIP, basé sur l'IMS en un message de demande au format de protocole privé basé sur le système IPTV ;
la transmission du message converti dans le format de protocole basé sur le système IPTV à une entité correspondante dans le système IPTV en fonction du contenu du message comprend en outre : l'envoi du message de demande dans le format de protocole privé basé sur le système IPTV à un centre d'authentification et d'autorisation, AAC.

13. Procédé de réalisation d'un service IPTV selon la revendication 10, dans lequel :
si le message reçu du terminal utilisateur est un message de demande de contenu, la conversion du message entre le message au format de protocole basé sur l'IMS et un message dans un format de protocole basé sur un système IPTV comprend en outre :
la conversion du message de demande au format SIP basé sur l'IMS en un message de demande au format de Protocole de Diffusion Continue en Temps Réel, RTSP, basé sur le système IPTV ;
la transmission du message converti dans le format de protocole basé sur le système IPTV à une entité correspondante dans le système IPTV en fonction du contenu du message comprend en outre : la transmission du message de demande au format RTSP basé sur le système IPTV à un système de distribution et de stockage de contenu.

14. Procédé de réalisation d'un service IPTV selon la revendication 13, dans lequel si le message de demande de contenu est un message de demande à la demande, les étapes de conversion et de transmission comprennent en outre :
la conversion du message au format SIP basé sur l'IMS en un message au format de Protocole de Transfert Hypertexte, HTTP, et un message au format RTSP basé sur le système IPTV, l'envoi du message converti dans le format HTTP à l'AAC, et la réception d'un message de réponse d'authentification renvoyé par l'AAC ;
l'envoi du message converti dans le format RTSP à une unité de commande de centre multimédia pour demander une adresse de serveur multimédia en fonction de l'adresse de l'unité de commande de centre multimédia dans le message de réponse d'authentification, et la réception de l'adresse du serveur multimédia renvoyée par l'unité de commande de centre multimédia ; et
l'envoi du message de demande dans le format RTSP au serveur multimédia pour demander un contenu à la demande en fonction de l'adresse du serveur multimédia.

15. Procédé de réalisation d'un service IPTV selon la revendication 13, dans lequel si le message de demande de contenu est un message de demande de programme en direct, la conversion du message entre un message au format de protocole basé sur l'IMS et un message dans un format de protocole basé sur un système IPTV, la transmission du message converti dans le format de protocole basé sur le système IPTV à une entité correspondante dans le système IPTV en fonction du contenu du message comprennent en outre :
la conversion du message au format SIP basé sur l'IMS en un message au format HTTP basé sur le système IPTV, l'envoi du message converti au format HTTP à l'AAC, et la réception d'un message de réponse d'authentification renvoyé par l'AAC ; et
la conversion du message de réponse d'authentification renvoyé par l'AAC en un message au format SIP, l'envoi du message au format SIP au terminal utilisateur, le message comprenant une adresse de multidiffusion, l'adresse de multidiffusion étant utilisée par le terminal utilisateur afin de se joindre à un groupe de multidiffusion.

16. Support lisible par programme informatique, comprenant un code de programme informatique, lequel, lorsqu'il est exécuté par une unité d'ordinateur, amène l'unité d'ordinateur à exécuter les étapes selon les revendications 9 à 15.
